(19) Europäisches Patentamt
European Patent Office
Office européen des brevets

(11) **EP 2 645 675 B1**

(12) **EUROPEAN PATENT SPECIFICATION**

(45) Date of publication and mention
of the grant of the patent:
**27.02.2019 Bulletin 2019/09**

(51) Int Cl.:
***H04L 29/08*** *(2006.01)*

(21) Application number: **12167864.3**

(22) Date of filing: **14.05.2012**

(54) **BROKER CLUSTER AND METHOD OF OPERATING A BROKER CLUSTER**

BROKER CLUSTER UND VERFAHREN ZUM BETREIBEN EINES BROKER CLUSTER

GRAPPE DE COURTIER ET PROCÉDÉ D'EXPLOITATION D'UNE GRAPPE DE COURTIER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.03.2012 IN KA03492012**

(43) Date of publication of application:
**02.10.2013 Bulletin 2013/40**

(73) Proprietor: **Software AG**
**64297 Darmstadt (DE)**

(72) Inventor: **Singh, Vijayant**
**Paharia Varanasi 221007**
**Uttar Pradesh (IN)**

(74) Representative: **Wegner, Hans**
**Bardehle Pagenberg Partnerschaft mbB**
**Patentanwälte, Rechtsanwälte**
**Prinzregentenplatz 7**
**81675 München (DE)**

(56) References cited:
**EP-A1- 2 073 120     US-A1- 2006 168 154
US-A1- 2010 274 762**

**Description**

**1. Technical Field**

The present invention relates to a method of operating a broker cluster and to a corresponding broker cluster, and in particular to a way of reducing the network bandwidth usage in such a system.

**2. The Prior Art**

In the prior art, approaches are known for optimizing the network bandwidth usage in conventional distributed storage systems. For example, US 2011/0258239 A1 concerns a method and system for copying data between two deduplicating storage systems. Incoming data blocks are checked against all existing data blocks and the incoming block is only stored if it is unique (i.e. not already stored), otherwise the incoming block is not stored, but only a reference to the existing block. Further, GB 2354850 concerns the data processing with reuse of an existing message structure and deals with dynamic message forwarding/filtering rules for a messaging system. Moreover, US 2011/0258380 A1 concerns a fault tolerant storage for optimizing the number of memory writes on solid state devices.

In the field of networked computer systems, it is further known to employ so-called brokers which connect clients in the sense of intermediary network nodes. The clients typically do not communicate directly with each other, but a client intending to send certain data (also referred to as runtime data, e.g. a message) to another client instead sends the data to the broker, which in turn (temporarily or permanently) stores the data and forwards it to the intended recipient client on behalf of the sending client (so-called store-and-forward system).

In order to avoid that a broker becomes a performance bottleneck when connecting many clients, it is also known to provide multiple brokers forming a so-called broker cluster. The most common architecture of a broker cluster is that every broker is connected to every other broker within the cluster via respective network connections, i.e. the cluster forms a complete graph structure (also known as full-mesh network or N-node complete graph). The data of a client received at a particular broker is replicated to all other brokers in the cluster, thereby achieving full redundancy of the data within the cluster. As a result, any broker within the cluster can act as a backup and/or load-balancing peer for every other broker in the cluster.

However, in a conventional full-meshed broker cluster with N brokers, there are $N*(N-1)/2$ network connections between the brokers and thus every time data is updated in the cluster, N send operations are necessary on an average in order to synchronize the cluster. In typical real-life scenarios with hundreds or even thousands of brokers, this results in heavily increased network bandwidth consumption as well as high requirements on the overall system's memory and disk capacities.

Some currently available products in the messaging domain are based on a static clustering at the level of hardware/software or at the application layer. Other approaches are based on tree structured data regeneration in a distributed environment which deals with the recovery of data on the network rather than bandwidth optimization on a large throughput networked cluster.

U.S. patent application publication 2006/0168154 A1 relates to a system and method for a distributed object store. Said system comprises applications with policies and data objects. These applications are coupled to system nodes by a network. This document further provides a method for the *"Object checkin"*. In particular, an access module receives a request to checkin the data object of the respective application. The application which executes on a client comprises random and application-specific placement policies for selecting nodes for placement of the replicas. Further, the replicas of the data objects on the nodes are created.

U.S. patent application publication 2010/0274762 A1 proposes systems and methodologies for facilitating distributed storage of data. Said system comprises a replication component and storage node(s), each communicating with a placement component. In particular, the replication component identifies the replica requirement on the basis of characteristics of the storage node(s), e.g. availability of the storage nodes. The placement component replicates a data portion across the storage node(s) in accordance with said replica requirement.

It is therefore the technical problem underlying the present invention to provide a method of operating a broker cluster which requires less network bandwidth and thereby at least partly overcomes the above explained disadvantages of the prior art.

**3. Summary of the Invention**

This problem is according to one aspect of the invention solved by a method of operating a broker cluster according to claim 1, wherein the broker cluster comprises a plurality of brokers, each of which is connected to each other broker of the cluster via a network connection. In the embodiment of claim 1, the method comprises the steps of:

a. dynamically designating at least one of the brokers as an active broker and at least one of the brokers as a passive broker based on a reliability index of the respective brokers; and

b. receiving data from a first client of the cluster and storing the data in only the active brokers of the cluster.

Accordingly, the present invention departs from the conventional approach of replicating data received at a broker cluster among all brokers (so-called "nodes") of the cluster. Instead, the individual brokers are dynamically set to either an active or a passive state and the data is replicated only to the active brokers, i.e. all active brokers store the data, but not the passive brokers. In other words, the present invention does not maintain full redundancy of the data within the cluster, but only partial redundancy of the data, namely in the active brokers. As a result, the data only has to be sent over a subset of the full-meshed network between the brokers when it is replicated, which reduces the amount of network traffic and also improves the resource usage of the individual brokers.

In order to still take advantage of all brokers within the cluster (i.e. also those brokers that were passive when a given piece of data was replicated), the brokers are dynamically switched between the states "active" and "passive" based on a respective reliability index of each broker (which will be explained in more detail further below). In this context, it could be that a certain data element which is requested by a client of the cluster is not available in any of the currently active brokers (since all brokers that were active and thus received the data have in the meantime become passive). Thus, when receiving a request from a second client for data of the cluster and, if the requested data is not available on the active brokers, the method may comprise the further step of requesting the data from a passive broker of the cluster which has the requested data. Accordingly, in this case, the data is requested by one of the passive brokers in order to still ensure that all data requests can be properly handled despite the advantageous partial redundancy. In this case, the selected passive broker is preferably also switched to the active state. Preferably, if more than one passive broker has the requested data, the data is requested from the passive broker with the highest reliability index. Of course, if none of the brokers of the cluster has the requested data, an error message or the like may be returned.

In one aspect of the present invention, the step of dynamically setting the brokers to either an active state or a passive state is performed such that a predefined ratio between active and passive brokers is maintained. Preferably, the predefined ratio between active and passive brokers is 7:3, which has turned out to be most suitable in typical broker clusters.

Furthermore, the present method may comprise the further step of calculating the reliability index of at least one of the brokers, wherein the reliability index is calculated based on any of the group of parameters comprising the number of times the broker fails over a given period of time, a moving average of downtimes of the broker, the time between the last two consecutive failures and / or the total age of the broker. The preferred method of calculating the reliability index is described in more detail in the detailed description further below.

Additionally or alternatively, each broker may comprise metadata indicating the reliability indexes of all brokers of the cluster. This way, each broker is aware of the reliability indexes of all other brokers so as to ensure a particularly flexible decision of which broker to request the desired data from. The metadata may comprise a ranking of the brokers of the cluster in accordance with their respective reliability indexes, wherein the metadata is preferably in the form of an order-statistics tree, most preferably in the form of an augmented red-black tree, as will be further explained in the detailed description. The ranking of the brokers according to their reliability indexes allows selecting the broker most suitable for providing the requested data.

Moreover, the method may comprise the step of synchronizing the metadata from one of the brokers to all other brokers of the cluster, i.e. to both the active and the passive brokers, as compared to the data itself, which is only synchronized between the active brokers.

In yet another aspect of the present invention, the step of dynamically setting the brokers to either an active state or a passive state is based on the reliability index of the respective broker and in addition on the amount of time since when the respective broker has joined the cluster.

The present invention also concerns a computer program according to claim 8 comprising instructions for implementing any of the above-described methods. Furthermore, a broker cluster according to claim 9 comprising a plurality of brokers is provided, wherein each broker is connected to each other broker of the cluster via a network connection, wherein the broker cluster further comprises means for dynamically designating at least one of the brokers as an active broker and at least one of the brokers as a passive broker based on a reliability index of the respective brokers and means for receiving data from a first client of the cluster and storing the data in only the active brokers of the cluster. The broker cluster may further comprise means for receiving a request from a second client for data of the cluster and, if the requested data is not available on the active brokers, requesting the data from a passive broker of the cluster which has the requested data.

Further advantageous modifications of embodiments of the method and the system of the invention are defined in further dependent claims.

## 4. Short Description of the Drawings

In the following detailed description, presently preferred embodiments of the invention are further described with reference to the following figures:

Fig. 1: A block diagram showing an exemplary broker cluster BC in accordance with an embodiment of the present invention;

Fig. 2a: A log file with persistent data P and non-persistent data N;

Fig. 2b: A log file with only persistent data (messages) P in accordance with an embodiment of the present invention;

Fig. 3: A flowchart of a process for transitioning brokers B from active to passive and vice versa in accordance with an embodiment of the present invention;

Fig. 4: A flowchart of a process for calculating the reliability index of a given broker B in accordance with an embodiment of the present invention;

Fig. 5: A flowchart of a process for synchronizing brokers B in accordance with an embodiment of the present invention;

Fig. 6: A flowchart of a process for message transfer in accordance with an embodiment of the present invention;

Fig. 7: A flowchart of a process for the transition of a broker B from active to passive and vice versa in accordance with an embodiment of the present invention;

Fig. 8: A block diagram showing a logical view of calculation and synchronization means in accordance with an embodiment of the present invention; and

Fig. 9: A block diagram showing an exemplary cluster with two brokers in accordance with an embodiment of the present invention.

## 5. Detailed Description

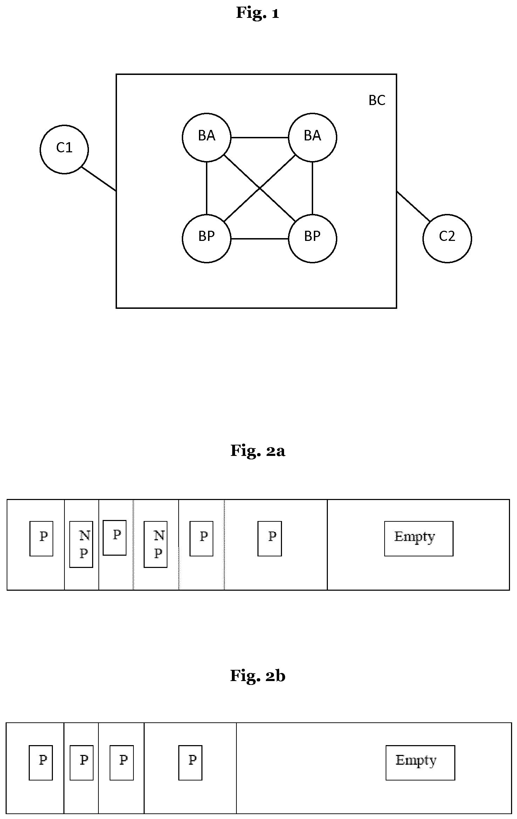

In the following, a presently preferred embodiment of the invention is described with respect to a broker cluster BC as schematically shown in Fig. 1. As can be seen, the exemplary broker cluster BC comprises active brokers BA and passive brokers BP, both of which are collectively referred to as brokers B hereinafter. The broker cluster is in communication with two exemplary clients C1 and C2 (collectively referred to as clients C hereinafter). The person skilled in the art will appreciate that Fig. 1 is only a very simple example of a broker cluster and that the present invention is susceptible to broker clusters involving any number of brokers and clients.

In the example of Fig. 1, client C1 intends to send data (e.g. a message) to client C2. To this end, the client C1 sends the data to the broker cluster BC, which then dispatches the data to the intended recipient client C2. In this context, each broker B in the cluster BC behaves as a representative for the entire cluster while communicating with a publishing/ subscribing client C, i.e. the client application never comes to know from which broker B the data is coming from and which broker B handles the data, respectively. In other words, the communication between the clients C and the cluster BC is transparent as far as provenance of data requested is concerned. In one embodiment, a client C which intends to get services from the cluster BC talks to any of the exposed broker nodes B and negotiates the connection to the desired level of redundancy and reliability, e.g. by means of the following algorithm:

```
START:
    - Do first connect with any broker from the cluster
    - Once connection is through
            1. Ask for the reliability index of the
               brokers that serve the group of clients
               that this client belongs to
            2. Prepare the preferable list of brokers to
               actually connect with based on configured
               reliability requirement
```

```
3. Candidate broker = next broker in the list
4. do until SUCCESS or EXHAUST
5. Try connecting with the broker in the list
        ▪ If this broker hasn't exhausted all
          its outgoing connections
                • Then connect with this
                • GoTo SUCCESS
        ▪ If this broker has exhausted all the
          client connections
                • GoTo STEP 3 and REPEAT
    ∘ SUCCESS
        ▪ Return
    ∘ EXHAUST
        ▪ Signal the broker cluster to make
          some more transition from passive to
          active brokers (see Active-Passive
          transition)
        ▪ GoTo START
        ▪ Do until SUCCESS
        END
```

The inventive broker cluster BC of one embodiment of the invention maintains redundancy of the data according to the ratio 1 : N/m, with N being the amount of brokers and m being a predefined parameter with $1 < m < N$, in order to reduce the network traffic while transferring data between the brokers B. By having a lesser number than all nodes carrying the run-time data provision responsibility (read redundancy), the amount of inter-node data transfers is reduced. This in turn facilitates fewer node failures and lesser disc/memory write operations for the cumulative setup.

Furthermore, the brokers B in the cluster BC dynamically transition between the active and the passive state based on a reliability index calculated for each broker B. The reliability indexes of the brokers B are combined into a reliability index ranking, which is preferably a binary search tree in the form of an order-statistics tree (OST) and most preferably an augmented red-black tree (as will be explained in more detail further below). A synchronized copy of the reliability index ranking is maintained across all brokers B in the cluster BC. Moreover, embodiments of the present invention update the above data structure with the aid of logical clocks, as will be explained in more detail further below. It is noted that while Fig. 1 shows the broker cluster BC in the preferred form of an N-complete graph system of nodes that are mirror images of each other, the general concepts underlying the present invention could also be applied at least in part to cluster servers in which not all brokers are connected with each other.

In preferred embodiments of the present invention, at least part of the following characteristics are provided: Each store-forward (read messaging) node (broker B) in the cluster BC has information about the other brokers B. The information preferably comprises two subsets of information indicating the other active brokers BA and the other passive brokers BP, respectively.

Given N brokers, redundancy is in a preferred embodiment maintained by having approximately 7*N/10 copies of data instead of N copies (as in the prior art), based on the reliability index ranking which divides the total number of nodes into two parts (i.e. active brokers BA and passive brokers BP based on a predetermined redundancy factor, e.g. 7: 3). As a simple example, if the cluster BC comprises N=10 brokers B with respective reliability indexes and if the redundancy factor is set to 7:3, the "best" seven brokers B (i.e. the brokers B having the highest reliability indexes) become active brokers BA and the other three brokers B become passive brokers BP. Since the reliability indexes of the individual brokers B and thus also the overall reliability index ranking is re-calculated on a constant basis (see further below), the assignment of the brokers B to the active and passive sets dynamically changes over time.

Reduced bandwidth is achieved for a set of operations (less data transfer per message publish/subscribe) by having a lesser number of candidate nodes receive the data (only active brokers BA receive the data). Whenever a broker B gets a request for data that is not available locally, it is sourced from another broker B in the cluster BC that has it. This decision is based on the reliability index ranking (preferably the order-statistics tree (OST) explained in greater detail further below).

Typically, a broker B (similar to any other messaging engine) deals with two types of messages: persistent (i.e. guaranteed delivery) and non-persistent (i.e. non-guaranteed delivery) messages. In general terms, a broker B handles such messages as follows in accordance with the store-and-forward mechanism:

- The message is received at the broker
- The message is classified at the broker as "delivery" or "broadcast" and "guaranteed" or "non-persistent"
- The broker preferably uses a database-like file system and / or indexing to store the messages

- The first storage layer is called "log" file, while the second layer is called "store" file
- The log file is on the (local) disk of the broker, but its content is flushed (i.e. deleted) at each broker restart
- The store file is also hosted on the disk, but the messages that are on the store file are available across broker restarts (i.e. persistent)
- Any message, guaranteed (persistent) or non-guaranteed (non-persistent) is first written to the log file
- If a client places a request for that message while it is on the log file, the message is delivered and following steps are performed:

  ◦ If the message is guaranteed, the broker waits for the client's acknowledgement - once positive acknowledgment is received, the message is deleted from the log file itself
  ◦ If the acknowledgement is delayed or a negative acknowledgement (the message was not received in full, etc.) and the log file is almost full, then the messages are transferred to the disk based store file for permanent storage
  ◦ If the message is non-persistent, then the message is just delivered to the client, and the broker does not wait for acknowledgement and the message is deleted from the log file

Accordingly, all the messages pass through the log file, while only the persistent/guaranteed delivery messages are passed further on to the store file as and when needed. In a messaging infrastructure, the lifespan of persistent messages is typically not more than a few hours, and that of non-persistent messages is hardly a few seconds. Therefore, the present broker cluster BC may keep non-persistent messages in the first layer of storage of a given broker B only (e.g. in a log file), whereas only the persistent messages go to the second storage layer (e.g. a storage means or storage file). This reduces the write efforts on the system to a great extent in case persistent messages are predominantly used. In this context, Fig. 2a shows a conventional log file storing both persistent data (denoted "P") and non-persistent data (denoted "N"), while Fig. 2b shows a log file with only persistent data "P".

When redundancy, data scaling, and dynamics are all high, it is known that the needed cross-system bandwidth is unreasonable (cf. e.g. "High Availability, Scalable Storage, Dynamic Peer Networks: Pick Two" by Blake, Rodrigues, et al.). The present method and system encourages less frequently accessed systems to remain dormant (passive, i.e. not receiving frequent data updates) and produces services on demand, thereby helping to reduce network traffic.

The present invention solves the problem of high data transfer between broker nodes by providing a system to dynamically choose which node gets the data along with a system to segregate between active and passive nodes so that node to node data transfer can be optimized. To achieve the above-mentioned functionality, the broker cluster BC of the present invention preferably comprises the following key components:

- Means for calculating the reliability index for each broker B (store-forward) node. Preferably, such means are Reliability Index Calculators in each broker B which calculate the reliability index of that particular broker at predefined intervals.
- Means for updating the ranking of broker nodes B dynamically. Preferably, such means are Node Rank Updaters in each broker B which run a method as a daemon (or other background process) to seamlessly update its rank in the global reliability index ranking (Order Statistics Tree).
- Means for updating (synchronizing) the ranking to all the participating broker nodes B seamlessly. Preferably, such means are Update Synchronizers in each broker B. Before every update to a particular store-forward node's rank in the aforementioned global reliability index ranking, a lock is taken on that node's memory representation (read object residing in memory) and this node cannot leave the setup as long as there are any locks alive (i.e. reference count greater than zero).
- A resultant system (combination of the above three) to optimize disk writes in case of persistent messages (data)

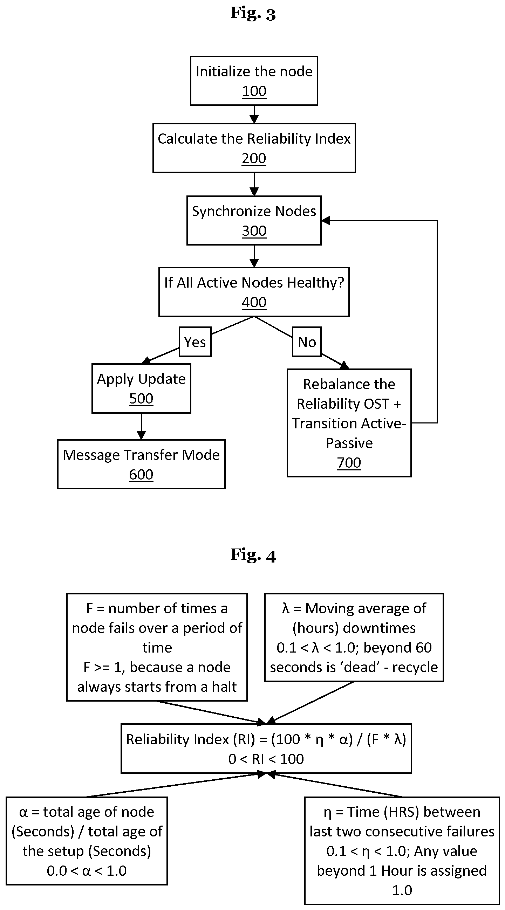

In the following, the operation of a preferred embodiment of the invention is explained with reference to Figs. 3 - 7. Fig. 3 is a flowchart of steps performed during the dynamic switching of the brokers (B) (also referred to as "nodes") between the states "active" and "passive" and vice versa. The method of Fig. 3 starts when the respective node is initialized in step 100. In step 200, the reliability index is calculated and the nodes are synchronized in step 300 (see further below). In step 400, it is checked whether all active nodes BA are healthy (see further below) and if yes, the update is applied in step 500, before the method proceeds to message transfer mode in step 600 (see further below). Otherwise, the reliability index ranking is rebalanced and any necessary transitions between active/passive mode are performed in step 700 (see further below). "Apply Update" in step 500 preferably means that the state of this initialized broker node is stored in memory, the relevant data structures are updated, client list and reliability index tree etc. are committed to memory for further reference. After applying the update, the node moves on to the state of Message Transfer (step 610; cf. further below) and is ready for servicing clients C. From there on, any new client requesting a list of reliable broker nodes would most possibly get this node as well during the connection negotiation. Once this node starts servicing clients and remains in the active state (not dead, successful message deliveries and thereby maintained high reliability index), the node will start featuring in the top zone of nodes for forthcoming clients.

Fig. 4 is a block diagram showing a preferred embodiment of calculating the reliability index (RI) of a given broker node B during step 200 of Fig. 3. As can be seen in Fig. 4, the reliability index (RI) is preferably calculated as

$$\text{Reliability Index (RI)} = (100 * \eta * \alpha) / (F * \lambda)$$

with $0 < RI < 100$, F being the number of times a node fails over a period of time ($F >= 1$, because a node always starts from a halt), $\lambda$ being the moving average of downtimes (in hours, $0.1 < \lambda < 1.0$, beyond 60 seconds is 'dead' - recycle), $\eta$ being the time (in hours) between last two consecutive failures ($0.1 < \eta < 1.0$; any value beyond 1 Hour is assigned 1.0 and $\alpha$ being the total age of the node (in seconds) divided by the total age of the cluster (in seconds) ($0.0 < \alpha < 1.0$).

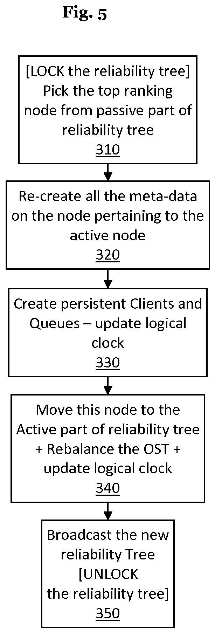

Fig. 5 is a flowchart showing in more detail the steps performed during step 300 (synchronize nodes) of Fig. 3. It is noted that while the following steps are described in the context of the preferred reliability index ranking in the form of a reliability index tree (preferably an order-statistics tree OST), the methods described herein are equally applicable to any other suitable reliability index ranking data structure. As a first step, the reliability index tree is locked and the top ranking node from the passive part of the reliability index tree is selected in step 310. Since the reliability index tree is preferably a shared data structure, there should be a protocol to modify it and at a time only one entity should be allowed to modify or alter. This is why a lock is required. In case there are more than one nodes requiring changes, they will have to wait for this lock to be released by the current node and then acquire the lock to perform their changes. Accordingly, the locking is required to synchronize the changes and also to keep the data structure in a stable state at all times.

In step 320, all the metadata on the node pertaining to the Active node is re-created. Accordingly, when a passive node takes the place of an active node when there is a run-time transition happening (i.e. the nodes are alive and able to share their metadata details with each other), the incoming (i.e. new) node tries to take over as much of the responsibilities of the outgoing (i.e. former active) node. For example, step 330 comprises creating persistent clients and queues. Here, in the context of persistent clients, queues are metadata objects which are stored on the disk based store file (similar as to what happens in case of messages (see further above), only this time they are stored in a configuration storage). This is why recreating the outgoing node's metadata set on the incoming node is required for a smooth transition. The logical clock also needs to be updated in order for the nodes to avoid conflicts in case there is a request from a client and a node has to be chosen. Logical clocks play an important part in decision making at all times and transitions in the present invention and hence they need to be updated as soon as there is any change in either the node's state or the reliability index tree, etc.. Step 340 comprises moving this node to the active part of the reliability index tree, rebalancing the reliability index tree and updating the logical clock. In step 350, the new reliability tree is broadcasted to all other nodes and the reliability index tree is unlocked.

Generally, persistent clients are clients C which are created by an external application once and are used across timelines. They are created once and reconnected to subsequently by the external applications taking services of the broker. Each client corresponds to a queue on the broker, and the queue is also maintained on the log section of the configuration storage file for its lifetime (if it is a non-persistent client queue) and passed on to the disk based configuration store file if it is a persistent client queue.

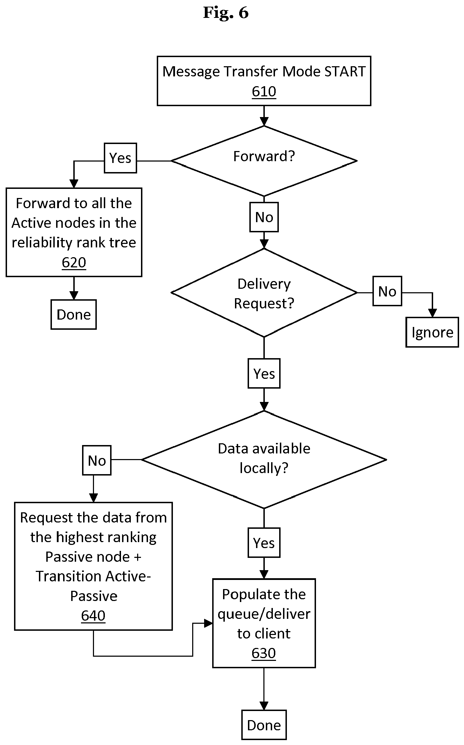

Fig. 6 is a flowchart comprising a more detailed view of the message transfer mode in step 600 of Fig. 3. The method starts at step 610 and checks whether the request received from the client C is a forward request (i.e. a request for forwarding certain data to another client C). If yes, the data is forwarded to all the active nodes BA in the reliability index tree (step 620). Otherwise, it is checked whether the request is a delivery request (i.e. a client C wants to obtain data from the cluster BC). If yes, it is checked whether the requested data is available locally (i.e. available on the broker BA performing the described method steps), and if yes, an output queue of the cluster BC is populated with the data or the data is delivered to the client C, respectively (step 630). Otherwise, the desired data is requested from the highest ranking passive node BP and the procedure "transition active-passive" is performed in step 640, before the method proceeds to step 630.

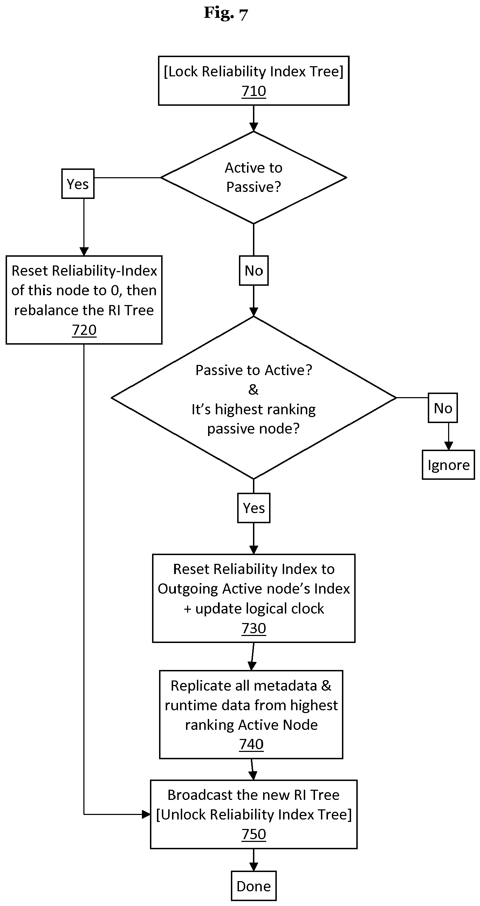

Fig. 7 is a flowchart comprising a more detailed view of the procedure "transition active-passive" referenced in step 700 of Fig. 3 and step 630 of Fig. 6. First of all, the reliability index tree is locked in step 710. As already explained above, any distributed system needs to protect the integrity of commonly used data structures via synchronized accesses by various actors, and locking is one of the most efficient mechanisms to grant exclusive access to one entity at a given time. Then, it is checked whether a transition from active to passive is needed (depending on whether the respective node is currently active or passive). If yes (i.e. if the node is currently active), the method proceeds to step 720, where the reliability index of this node is reset to 0 (zero) and the reliability index tree is re-balanced. Otherwise, it is checked whether a transition from passive to active is needed (i.e. if the node is currently passive) and whether the node is the highest ranking passive node. If yes, the reliability index is reset to the outgoing active node's index and the logical clock is updated in step 730. In other words, the reliability index of the passive node (the highest ranking incoming node from the passive node section) is readjusted to mimic the reliability index of the outgoing active node (only if it is higher than that of the incoming node). This is because sometimes even a relatively reliable node goes out of the cluster due to reasons beyond the control of the broker cluster, so in that case any incoming node should be ready to shoulder this responsibility.

In step 740, all metadata is replicated to all nodes and the data from the highest ranking active node is replicated. In step 750, the new reliability index tree is broadcast to all nodes, before the reliability index tree is unlocked.

The following preconditions are assumed in some embodiments of the present invention:

- Gateway nodes (i.e. nodes B that join two different clusters BC of store-forward/messaging nodes) always have a high reliability index - hence they never miss run-time data, gateway nodes are a part of their respective cluster itself, the only difference is that they have one additional link to the node from another cluster as part of the gateway. Therefore, a gateway broker B can never be disconnected (i.e. put to passive) and its reliability index is always set to a high value by default.

- The normal cluster nodes B keep updating the metadata (configuration information) seamlessly. Territory brokers keep storing the metadata as usual. "Territory broker" is used herein as a synonym for the brokers B already described. In the field of broker technology, the term "territory" just refers to a broker cluster BC, i.e. a logical unit of one or more brokers B serving a set of clients C.

- Every store-forward/messaging node B has a dedicated means to update the reliability index during runtime.

- Additional metadata added to the existing nodes B may comprise a flag:Active/Passive and delta:clients-to-replicate (delta means the difference in the existing client list and the latest client list snapshot). Generally, every broker has knowledge of the persistent clients whom it is serving at a given point (client list; a client List snapshot is the state of the list of clients at a given moment). Furthermore, the metadata may comprise client group info, RBroker Queues, gateway territory information, active/passive state and/or number of clients to replicate, which are explained as follows:

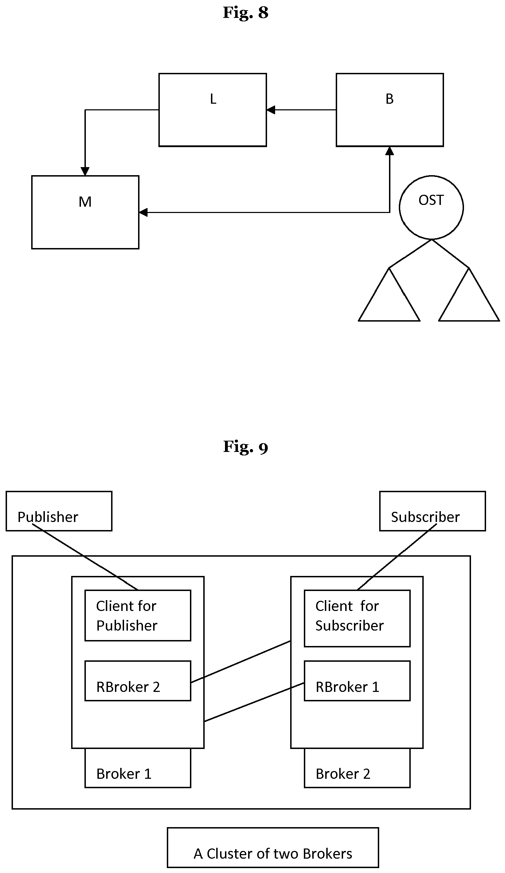

  ◦ Flag Active:Passive - to identify quickly if this node is in active state or passive state
  ◦ Delta clients-to-replicate - In case a transition is required, this node requires the list of clients that it needs to create in order to take up the job of an outgoing active node, OR the clients it needs to delete in case it is moving from active state to passive state
  ◦ The assumption is that an active broker for a particular group of clients may be a passive broker for another particular group of clients (grouping can be done based on anything like the subscription to similar documents, all the clients created by a common external application, etc.)
  ◦ RBroker and RBroker queues - Every broker in a cluster sees another broker as a client. The only difference is that it calls them remote-brokers (or RBroker), and as described earlier, every client has a queue associated with it, so each RBroker object also has an RBroker queue. Inter broker data transfer happens through RBrokers and their queues. This is precisely the RBroker concept (cf. also Fig. 9).

In certain embodiments, the method and broker cluster BC of the present invention has some or all of the following characteristics:

- Start

  ◦ Have the nodes categorized into two subsets "Active" and "Passive"
  ◦ The Active nodes are seamlessly updated with both the metadata and the runtime data (read persistent/volatile messages)
  ◦ The Passive nodes are updated with the metadata, and preferably "on-demand" updates of the runtime data. In this context, "on-demand" updating relates to the event of a client requesting data (message) from a node which does not have it, so that the node has to update the run-time data from another node that has the data and service the request. In general scenarios, it will seldom happen that a high ranking active node does not have the requested data, however, in rare cases when it happens, that node has to fetch the data from others. Passive nodes come into the picture when there is a commonality in the message subscription across the groups of clients and the passive nodes also get a number of messages which some active nodes in case of lost or non-availability of the same at their end, can ask to be sent from a passive node to an active node.
  ◦ A means "M" (cf. Fig. 8) does the actual synchronizing of metadata (based on reliability index tree rank) - this update happens to all the nodes
  ◦ Logical Clock "L" (cf. Fig. 8) (e.g. based on UNIX epoch time incremented in the units of seconds) - synchronized at the creation of the node with that of the cluster, output of which are fed to the means "M" to synchronize node updates

- All the nodes B have an in-memory data-structure of the reliability index rank tree (preferably an Augmented Red-Black tree, wherein the augmentation parameter is the reliability index of each participating node, be it Active or Passive) (shown as "OST" in Fig. 8).
- A means "B" for calculating the reliability index of the nodes based on suitable parameters (see further above and Fig. 4).
- Updates due to "B", "L" and "M" at any particular node reflect in the current state of "OST" stored in the entire system/setup. In other words, any updates/changes on the Reliability Index Tree due to any action by B (Broker), L (Logical Clock) and / or M (The Synchronization Machine) are reflected (are updated) across the entire cluster nodes.

- Categories of operations performed:

  - Metadata update
  - Data transfer through cluster setup
  - "Passive" to "Active" transition

- Distinguish between "Active" and "Passive" nodes based on the following (i.e. dynamically set the brokers B in the cluster BC to either "active" or "passive" based on the following parameters):

  - Reliability indices of the nodes (preferably maintained as in-memory globally replicated data structure)
  - Lifespan of the node (at node restart, its rank becomes least in the reliability index tree)
  - "Active" nodes are the ones that have a better moving index, the nodes that have less than the average index become "Passive" (i.e. they stop getting seamless run-time data updates)
  - Which node moves from Passive to Active mode is decided on the basis of their logical clock time and reliability rank on the reliability index tree maintained in all the nodes of the cluster.
  For example, if two brokers A and B just became candidates for P-to-A (passive to active) transition and their <Reliability Index, Logical Clock> tuple is A::<39.8394, 1320869300 > and B::<39.8394, 1320869329>, then A will be promoted to the "active" state because it was updated earlier and hence (despite the same reliability index), A has the advantage of 29 seconds of lifetime over B.
  - Whenever an active node goes down or is taken off, a passive node which has the best rank outside of the active nodes takes its place by replicating the data in transit (prior to the outage of the active node)
  - Data replication scenario:

    - Active nodes - always
    - Passive nodes - latest logical clock timing, then highest rank (in this order)

- The nodes are maintained in a logical manner with the help of an Order-Statistics Tree (OST) using the reliability index calculated with a suitable mathematical model given in the flow charts of Figs. 3 - 7.
- Metadata updates are pushed to all the nodes irrespective of their position in the OST
- A data transfer multicast happens only on the nodes that reside on the left sub-tree accommodating the nodes with better rank (the left half of the OST is typically the 'Active' part of the reliability index rank tree)
- Once a node's reliability rank goes into the "N/2 + 1" to "3*N/4" range, it becomes "unhealthy" and is replaced by the one which has shown the best ascendency over the same period of time from the "Passive" set.

  - In the above example, the factor ¾ is chosen to keep approximately 75% of the nodes in the potential active pool all the time
  - It can be chosen anywhere between N/2 + 1 to N, the former making it an optimal cluster with half-of-N + 1 nodes forming the redundant set, while the latter (N) making it a classical cluster similar to the solution known from the prior art

- The replacement node is preferably the one which has the earliest logical clock and the best ranking in the reliability index OST (as described further above)
- The new logical entity "node" will have the following additional fields to facilitate the maintenance of the OST and logical clock values in-memory:

  - Current Node:

    - Metadata

- Fwd/Queues

- Client data

- Shared storage

○ New Node:

- Metadata
- Fwd/Queues
- Client data
- Logical clock + reliability OST
- Shared storage

In the following, exemplary methods performed by embodiments of the present invention are described in pseudo-code:
Method "Init":

```
START METHOD INIT
    1. DO for every node in the storage + communication
        setup
        a. Reset Logical-Clock
        b. Calculate the rank (reliability index) by
            the formula shown in Fig. 4
        c. Initialize the OST in-memory and balance as
            when a new rank of some other node is
            received
        d. Populate 'Active' and 'Passive' sets from
            the above OST
        e. Broadcast own rank along with the Logical-
            Clock value
    2. END DO
    END METHOD INIT
```

Method WRAPPER "ActivePassiveNodes":

```
START METHOD ACTIVEPASSIVENODES
    1. (define NumActiveNodes)
    2. (return number of active nodes from the in-memory
        OST)
    3. (define NumPassiveNodes)
    4. (return number of passive nodes from the in-
        memory OST)
        END METHOD ACTIVEPASSIVENODES
```

In summary, the present invention facilitates a setup wherein it is not needed to keep N copies of the data on N active nodes when a more optimal result can be achieved the lesser number of nodes serving the same number of clients, while a set of dynamically joining-leaving nodes serving the data request "on-demand". The invention is not directed to a performance optimizing solution for purely storage setups, network drives or purely communication setups. Rather, the invention is specific to the problems faced by a complete-graph-like cluster setup of storage-communication nodes that deal with a great number of transactions and frequent updates while keeping the redundancy and integrity of the data they deal with intact. To this end, the invention preferably uses an Order-Statistics Tree (OST) data structure and the above-described concept of redundant storage of data. As a result, the invention is advantageous in messaging broker-like entities where it can reduce the redundancy and load on a per-node on average basis, while increasing the availability of the nodes in a self-healing fashion.

The Order-Statistics Tree (OST) used in embodiments of the present invention is described as follows:
An Order-Statistics Tree (OST) is preferably a Red-Black Tree, whose general structure is known in the art (in other words, balanced binary search tree with colour-coded nodes that make it very efficiently searchable and balanceable in optimal time), augmented with additional data (such as rank/priority), which facilitates an almost constant time search for a k-th ranked node/element.

Method "Rank OST":

```
Rank (root, x):
if root is null:
   error: not found
else if x < root.key:
   return Rank(root.left, x)
else if x = root.key:
   if root.left is not null:
     return root.left.count + 1
   else:
     return 1
else if x > root.key:
   if root.left is not null:
     return root.left.count + 1 + Rank(root.right, x)
   else:
     return 1 + Rank(root.right, x)
```

Method "FindByRank":

```
FindByRank(root, k):
if root is null:
   error: not found
if root.left is null:
   leftcount = 0
else:
   leftcount = root.left.count
if k <= leftcount:
   return FindByrank(root.left, k)
else if k = leftcount + 1:
   return root
else if k > leftcount + 1:
   return FindByRank(root.right, k - leftcount - 1)
```

In the above pseudo-code examples, both methods run in O(lnN) time.

In summary, the above-described embodiments of the present invention not only optimize the overall network bandwidth and resource usage in a broker cluster system, but also the publisher/subscriber clients' dependency on an effective pool of available brokers (with no intelligent decision making metric such as reliability, lifetime in the cluster, etc.) to choose from to switch between the brokers. The typical known approach of connecting to any one broker from the cluster and then failing over to the next one in case the earlier one went dead is done away with in this approach. One of the central concepts of the present invention is to improve the data passing and redundancy maintenance mechanism of store-and-forward-clusters, which is employed to maintain cross-cluster uniformity of data state as well as the independence to the client of connecting to any participating broker and still be guaranteeing data delivery. One of the central ideas is also to provide an intra-cluster "dynamic"/"self-correcting" group of active and passive broker nodes, wherein all the active brokers behave like augmented cluster nodes (i.e. they get every data broadcast from any member of the "active" sub-cluster) that are changing state as well as membership (to either the active or passive group/sub-cluster of brokers) based on a algorithmic strategy that promises almost the same redundancy as the N-N cluster while reducing the net amount of data transfer per message delivery from publisher to subscriber (as described in the patent report).

Due to the present invention, the clients are now able to communicate with a smaller subset of the cluster which is dedicatedly serving their messages and another subset that is in a standby mode. However, the standby subset (i.e. passive brokers) for a given set of clients can at the same time be an active subset to another set of clients. This essentially reduces the load on the cluster network, because instead of all the messages passing to all the broker nodes, there are a part going to a group while another part going to another group, effective bandwidth utilization to achieve a reasonable redundancy and failover can potentially be brought up by the factor of active:passive (as described further above).

**Claims**

1. A method of operating a broker cluster (BC), wherein the broker cluster (BC) comprises a plurality of brokers (B), each of which is connected to each other broker (B) of the cluster (BC) via a network connection, wherein the method comprises the following steps:

   a. dynamically switching the plurality of brokers (B) between an active and a passive state, thereby designating at least one of the brokers (B) as an active broker (BA) and at least one of the brokers (B) as a passive broker (BP) based on a reliability index of the respective brokers (B);
   b. receiving data from a first client (C1) of the cluster (BC) and storing the data in only the at least one active broker (BA) of the cluster (BC); and
   c. receiving a request from a second client (C2) for data of the cluster (BC), providing the data to the second client by a currently active broker (BA), if the requested data is available on the currently active brokers (BA) and, if the requested data is not available on the currently active brokers (BA) of the cluster (BC) since all brokers that were active in step b. have become passive in the meantime, requesting the data from a passive broker (BP) of the cluster (BC) which has the requested data.

2. The method of any of the preceding claims, wherein the step of dynamically switching the brokers (B) to either an active state or a passive state is performed such that a predefined ratio between active (BA) and passive brokers (BP) is maintained, and wherein the predefined ratio is preferably 7:3.

3. The method of any of the preceding claims, comprising the step of calculating the reliability index of at least one of the brokers (B),
   wherein the reliability index is calculated based on any of the group of parameters comprising: the number of times the broker (B) fails over a given period of time, a moving average of downtimes of the broker (B), the time between the last two consecutive failures and / or the total age of the broker (B).

4. The method of any of the preceding claims, wherein each broker (B) comprises metadata indicating the reliability indexes of all brokers (B) of the cluster (BC).

5. The method of the preceding claim 4, wherein the metadata comprises a ranking of the brokers (B) of the cluster (BC) in accordance with their respective reliability indexes, wherein the metadata is preferably in the form of an order-statistics tree, most preferably in the form of an augmented red-black tree.

6. The method of any of the preceding claims 4 or 5, comprising the step of synchronizing the metadata from one of the brokers (B) to all other brokers (B) of the cluster (BC).

7. The method of any of the preceding claims, wherein the step of dynamically switching the brokers (B) to either an active state or a passive state is based on the reliability index of the respective broker (B) and on the amount of time since when the respective broker (B) has joined the cluster (BC).

8. A computer program comprising instructions for implementing a method in accordance with any of the preceding claims 1 - 7.

9. A broker cluster (BC) comprising a plurality of brokers (B), each of which is connected to each other broker (B) of the cluster (BC) via a network connection, wherein the broker cluster (BC) further comprises:

   a. means for dynamically switching the plurality of brokers (B) between an active and a passive state, thereby designating at least one of the brokers (B) as an active broker (BA) and at least one of the brokers (B) as a passive broker (BP) based on a reliability index of the respective brokers (B);
   b. means for receiving data from a first client (C1) of the cluster (BC) and storing the data in only the at least one active broker (BA) of the cluster (BC); and
   c. means for receiving a request from a second client (C2) for data of the cluster (BC), providing the data to the second client by a currently active broker (BA), if the requested data is available on the currently active brokers (BA) and, if the requested data is not available on the currently active brokers (BA) of the cluster (BC) since all brokers that were active and thus received the data have become passive in the meantime, requesting the data from a passive broker (BP) of the cluster (BC) which has the requested data.

10. The broker cluster (BC) of claim 9, wherein the means for dynamically switching the brokers (B) to either an active state or a passive state is adapted for maintaining a predefined ratio between active (BA) and passive brokers (BP), wherein the predefined ratio is preferably 7:3.

11. The broker cluster (BC) of claim 9 or 10, further comprising means for calculating the reliability index of at least one of the brokers (B),
wherein the reliability index is calculated based on any of the group of parameters comprising: the number of times the broker (B) fails over a given period of time, a moving average of downtimes of the broker (B), the time between the last two consecutive failures and / or the total age of the broker (B).

12. The broker cluster (BC) of any of the preceding claims 9 - 11, wherein each broker (B) comprises metadata indicating the reliability indexes of all brokers (B) of the cluster (BC).

13. The broker cluster (BC) of the preceding claim 12, wherein the metadata comprises a ranking of the brokers (B) of the cluster (BC) in accordance with their respective reliability indexes, wherein the metadata is preferably in the form of an order-statistics tree, most preferably in the form of an augmented red-black tree.

14. The broker cluster (BC) of any of the preceding claims 12 or 13, further comprising means for synchronizing the metadata from one of the brokers (B) to all other brokers (B) of the cluster (BC).

**Patentansprüche**

1. Verfahren zum Betreiben eines Brokerclusters (BC), wobei der Brokercluster (BC) eine Vielzahl von Brokern (B) umfasst, von denen jeder über eine Netzwerkverbindung mit dem anderen Broker (B) des Clusters (BC) verbunden ist, wobei das Verfahren die folgenden Schritte umfasst:

   a. dynamisches Umschalten der Vielzahl von Brokern (B) zwischen einem aktiven und einem passiven Zustand, wodurch mindestens einer der Broker (B) als aktiver Broker (BA) und mindestens einer der Broker (B) als passiver Broker (BP) basierend auf einem Zuverlässigkeitsindex der jeweiligen Broker (B) bezeichnet wird;
   b. Empfangen von Daten von einem ersten Client (C1) des Clusters (BC) und Speichern der Daten in nur dem mindestens einen aktiven Broker (BA) des Clusters (BC); und
   c. Empfangen einer Anfrage eines zweiten Clients (C2) nach Daten des Clusters (BC), Bereitstellen der Daten an den zweiten Client durch einen aktuell aktiven Broker (BA), wenn die angeforderten Daten auf den aktuell aktiven Brokern (BA) verfügbar sind und, wenn die angeforderten Daten auf den aktuell aktiven Brokern (BA) des Clusters (BC) nicht verfügbar sind, da alle Broker, die in Schritt b. aktiv waren, in der Zwischenzeit passiv geworden sind, Anfordern der Daten von einem passiven Broker (BP) des Clusters (BC), der die angeforderten Daten hat.

2. Verfahren nach einem der vorhergehenden Ansprüche, wobei der Schritt des dynamischen Umschaltens der Broker (B) entweder in einen aktiven Zustand oder einen passiven Zustand so durchgeführt wird, dass ein vordefiniertes Verhältnis zwischen aktiven (BA) und passiven Brokern (BP) beibehalten wird, und wobei das vordefinierte Verhältnis vorzugsweise 7:3 beträgt.

3. Verfahren nach einem der vorhergehenden Ansprüche, umfassend den Schritt des Berechnens des Zuverlässigkeitsindex von mindestens einem der Broker (B), wobei der Zuverlässigkeitsindex basierend auf einem der Gruppe von Parametern berechnet wird, umfassend: die Anzahl der Ausfälle des Brokers (B) über einen gegebenen Zeitraum, einen gleitenden Durchschnitt der Ausfallzeiten des Brokers (B), die Zeit zwischen den letzten beiden aufeinanderfolgenden Ausfällen und/oder das Gesamtalter des Brokers (B).

4. Verfahren nach einem der vorhergehenden Ansprüche, wobei jeder Broker (B) Metadaten umfasst, die die Zuverlässigkeitsindizes aller Broker (B) des Clusters (BC) anzeigen.

5. Verfahren nach dem vorhergehenden Anspruch 4, wobei die Metadaten ein Ranking der Broker (B) des Clusters (BC) gemäß ihren jeweiligen Zuverlässigkeitsindizes umfassen, wobei die Metadaten vorzugsweise in Form eines Order-Statistic-Baums, am bevorzugtesten in Form eines erweiterten Rot-Schwarz-Baums, vorliegen.

6. Verfahren nach einem der vorhergehenden Ansprüche 4 oder 5, umfassend den Schritt des Synchronisierens der Metadaten von einem der Broker (B) zu allen anderen Brokern (B) des Clusters (BC).

7. Verfahren nach einem der vorhergehenden Ansprüche, wobei der Schritt des dynamischen Umschaltens der Broker (B) in entweder einen aktiven oder einen passiven Zustand auf dem Zuverlässigkeitsindex des jeweiligen Brokers (B) und auf der Zeitspanne seit dem Beitritt des jeweiligen Brokers (B) zum Cluster (BC) basiert.

8. Ein Computerprogramm, umfassend Anweisungen zum Implementieren eines Verfahrens gemäß einem der vorhergehenden Ansprüche 1 - 7.

9. Broker-Cluster (BC), umfassend eine Vielzahl von Brokern (B), von denen jeder mit jedem anderen Broker (B) des Clusters (BC) über eine Netzwerkverbindung verbunden ist, wobei der Broker-Cluster (BC) ferner umfasst:

   a. Mittel zum dynamischen Umschalten der Vielzahl von Brokern (B) zwischen einem aktiven und einem passiven Zustand, wodurch mindestens einer der Broker (B) als aktiver Broker (BA) und mindestens einer der Broker (B) als passiver Broker (BP) basierend auf einem Zuverlässigkeitsindex der jeweiligen Broker (B) bezeichnet wird;
   b. Mittel zum Empfangen von Daten von einem ersten Client (C1) des Clusters (BC) und Speichern der Daten in nur dem mindestens einen aktiven Broker (BA) des Clusters (BC); und
   c. Mittel zum Empfangen einer Anfrage von einem zweiten Client (C2) nach Daten des Clusters (BC), Bereitstellen der Daten an den zweiten Client durch einen aktuell aktiven Broker (BA), wenn die angeforderten Daten auf den aktuell aktiven Brokern (BA) verfügbar sind und, wenn die angeforderten Daten auf den aktuell aktiven Brokern (BA) des Clusters (BC) nicht verfügbar sind, da alle Broker, die aktiv waren und somit die Daten empfangen haben, in der Zwischenzeit passiv geworden sind, Anfordern der Daten von einem passiven Broker (BP) des Clusters (BC), der die angeforderten Daten hat.

10. Broker-Cluster (BC) nach Anspruch 9, wobei das Mittel zum dynamischen Umschalten der Broker (B) in entweder einen aktiven oder einen passiven Zustand angepasst ist, um ein vordefiniertes Verhältnis zwischen aktiven (BA) und passiven Brokern (BP) beizubehalten, wobei das vordefinierte Verhältnis vorzugsweise 7:3 beträgt.

11. Broker-Cluster (BC) nach Anspruch 9 oder 10, ferner umfassend Mittel zum Berechnen des Zuverlässigkeitsindex von mindestens einem der Broker (B),
wobei der Zuverlässigkeitsindex basierend auf einem der Gruppe von Parametern berechnet wird, umfassend: die Anzahl der Ausfälle des Brokers (B) über einen gegebenen Zeitraum, einen gleitenden Durchschnitt der Ausfallzeiten des Brokers (B), die Zeit zwischen den letzten beiden aufeinanderfolgenden Ausfällen und/oder das Gesamtalter des Brokers (B).

12. Broker-Cluster (BC) nach einem der vorhergehenden Ansprüche 9 - 11, wobei jeder Broker (B) Metadaten umfasst, die die Zuverlässigkeitsindizes aller Broker (B) des Clusters (BC) anzeigen.

13. Broker-Cluster (BC) nach dem vorhergehenden Anspruch 12, wobei die Metadaten ein Ranking der Broker (B) des Clusters (BC) gemäß ihren jeweiligen Zuverlässigkeitsindizes umfassen, wobei die Metadaten vorzugsweise in Form eines Order-Statistics-Baums, am bevorzugtesten in Form eines erweiterten Rot-Schwarz-Baums, vorliegen.

14. Broker-Cluster (BC) nach einem der vorhergehenden Ansprüche 12 oder 13, ferner umfassend Mittel zum Synchronisieren der Metadaten von einem der Broker (B) zu allen anderen Brokern (B) des Clusters (BC).


**Revendications**

1. Procédé de fonctionnement d'une grappe de courtiers (BC), dans lequel la grappe de courtiers (BC) comprend une pluralité de courtiers (B), dont chacun est connecté à un autre courtier (B) de la grappe (BC) via une connexion réseau, dans lequel le procédé comprend les étapes suivantes :

   a. la commutation dynamique de la pluralité de courtiers (B) entre un état actif et passif, en désignant ainsi au moins l'un des courtiers (B) comme un courtier actif (BA) et au moins l'un des courtiers (B) comme un courtier passif (BP) sur la base d'un indice de fiabilité des courtiers respectifs (B) ;
   b. la réception de données en provenance d'un premier client (C1) de la grappe (BC) et le stockage des données seulement dans l'au moins un courtier actif (BA) de la grappe (BC) ; et

c. la réception d'une requête en provenance d'un deuxième client (C2) pour des données de la grappe (BC), la fourniture des données au deuxième client par un courtier actuellement actif (BA) si les données demandées sont disponibles sur les courtiers actuellement actifs (BA) et, si les données demandées ne sont pas disponibles sur les courtiers actuellement actifs (BA) de la grappe (BC) depuis que tous les courtiers qui étaient actifs à l'étape b. sont devenus passifs entretemps, la requête des données en provenance d'un courtier passif (BP) de la grappe (BC) qui a les données demandées.

2. Procédé selon l'une des revendications précédentes, dans lequel l'étape de commutation dynamique des courtiers (B) soit à un état actif soit à un état passif est effectuée de manière qu'un rapport prédéfini entre des courtiers actifs (BA) et passifs (BP) soit maintenu, et dans lequel le rapport prédéfini est de préférence 7:3.

3. Procédé selon l'une des revendications précédentes, comprenant l'étape de calcul de l'indice de fiabilité d'au moins l'un des courtiers (B),
dans lequel l'indice de fiabilité est calculé sur la base de l'un des paramètres du groupe de comprenant : le nombre de fois où le courtier (B) échoue sur une période de temps donnée, une moyenne mobile des temps d'arrêt du courtier (B), le temps entre les deux dernières défaillances consécutives et/ou l'âge total du courtier (B).

4. Procédé selon l'une des revendications précédentes, dans lequel chaque courtier (B) comprend des métadonnées indiquant les indices de fiabilité de tous les courtiers (B) de la grappe (BC).

5. Procédé selon la revendication précédente 4, dans lequel les métadonnées comprennent un classement des courtiers (B) de la grappe (BC) en fonction de leurs indices de fiabilité respectifs, dans lequel les métadonnées sont de préférence sous la forme d'une arborescence de statistiques d'ordre, très préférentiellement sous la forme d'une arborescence rouge-noire augmentée.

6. Procédé selon l'une des revendications précédentes 4 ou 5, comprenant l'étape de synchronisation des métadonnées provenant de l'un des courtiers (B) avec tous les autres courtiers (B) de la grappe (BC).

7. Procédé selon l'une des revendications précédentes, dans lequel l'étape de commutation dynamique des courtiers (B) soit à un état actif soit à un état passif est basée sur l'indice de fiabilité du courtier respectif (B) et sur le temps écoulé depuis le moment où le courtier respectif (B) a rejoint la grappe (BC).

8. Programme informatique comprenant des instructions pour mettre en oeuvre un procédé selon l'une des revendications précédentes 1 à 7.

9. Grappe de courtiers (BC) comprenant une pluralité de courtiers (B), dont chacun est connecté à un autre courtier (B) de la grappe (BC) via une connexion réseau, dans laquelle la grappe de courtiers (BC) comprend en outre :

a. des moyens pour commuter de manière dynamique la pluralité de courtiers (B) entre un état actif et passif, en désignant ainsi au moins l'un des courtiers (B) comme un courtier actif (BA) et au moins l'un des courtiers (B) comme un courtier passif (BP) sur la base d'un indice de fiabilité des courtiers respectifs (B) ;
b. des moyens pour recevoir des données en provenance d'un premier client (C1) de la grappe (BC) et stocker les données seulement dans l'au moins un courtier actif (BA) de la grappe (BC) ; et
c. des moyens pour recevoir une requête en provenance d'un deuxième client (C2) pour des données de la grappe (BC), fournir les données au deuxième client par un courtier actuellement actif (BA) si les données demandées sont disponibles sur les courtiers actuellement actifs (BA) et, si les données demandées ne sont pas disponibles sur les courtiers actuellement actifs (BA) de la grappe (BC) depuis que tous les courtiers qui étaient actifs et ont ainsi reçu les données sont devenus passifs entretemps, requérir les données en provenance d'un courtier passif (BP) de la grappe (BC) qui a les données demandées.

10. Grappe de courtiers (BC) selon la revendication 9, dans laquelle les moyens pour commuter de manière dynamique les courtiers (B) soit à un état actif soit à un état passif sont adaptés pour maintenir un rapport prédéfini entre des courtiers actifs (BA) et passifs (BP), dans laquelle le rapport prédéfini est de préférence 7:3.

11. Grappe de courtiers (BC) selon la revendication 9 ou 10, comprenant en outre des moyens pour calculer l'indice de fiabilité d'au moins l'un des courtiers (B),
dans laquelle l'indice de fiabilité est calculé sur la base de l'un des paramètres du groupe comprenant : le nombre de fois où le courtier (B) échoue sur une période de temps donnée, une moyenne mobile des temps d'arrêt du courtier (B), le temps entre les deux dernières défaillances consécutives et/ou l'âge total du courtier (B).

12. Grappe de courtiers (BC) selon l'des revendications précédentes 9 à 11, dans laquelle chaque courtier (B) comprend des métadonnées indiquant les indices de fiabilité de tous les courtiers (B) de la grappe (BC).

13. Grappe de courtiers (BC) selon la revendication précédente 12, dans laquelle les métadonnées comprennent un classement des courtiers (B) de la grappe (BC) en fonction de leurs indices de fiabilité respectifs, dans lequel les métadonnées sont de préférence sous la forme d'une arborescence de statistiques d'ordre, très préférentiellement sous la forme d'une arborescence rouge-noire augmentée.

14. Grappe de courtiers (BC) selon l'une des revendications précédentes 12 ou 13, comprenant en outre des moyens pour synchroniser des métadonnées provenant de l'un des courtiers (B) avec tous les autres courtiers (B) de la grappe (BC).

**Fig. 1**

**Fig. 2a**

**Fig. 2b**

## Fig. 3

```
        Initialize the node
              100
                |
                v
    Calculate the Reliability Index
              200
                |
                v
        Synchronize Nodes  <-----------+
              300                        |
                |                        |
                v                        |
     If All Active Nodes Healthy?        |
              400                        |
            /        \                   |
        [Yes]        [No]                |
         /              \                |
  Apply Update    Rebalance the         |
      500         Reliability OST +      |
       |          Transition Active-     |
       v          Passive  --------------+
Message Transfer Mode   700
      600
```

## Fig. 4

```
F = number of times a          λ = Moving average of
node fails over a period of     (hours) downtimes
time                           0.1 < λ < 1.0; beyond 60
F >= 1, because a node         seconds is 'dead' - recycle
always starts from a halt

            Reliability Index (RI) = (100 * η * α) / (F * λ)
                         0 < RI < 100

α = total age of node           η = Time (HRS) between
(Seconds) / total age of        last two consecutive failures
the setup (Seconds)            0.1 < η < 1.0; Any value
0.0 < α < 1.0                   beyond 1 Hour is assigned
                                1.0
```

**Fig. 5**

```
┌─────────────────────────┐
│  [LOCK the reliability  │
│         tree]           │
│   Pick the top ranking  │
│  node from passive part │
│    of reliability tree  │
│          310            │
└─────────────────────────┘
             │
             ▼
┌─────────────────────────┐
│  Re-create all the      │
│  meta-data on the node  │
│  pertaining to the      │
│      active node        │
│          320            │
└─────────────────────────┘
             │
             ▼
┌─────────────────────────┐
│  Create persistent      │
│  Clients and Queues –   │
│  update logical clock   │
│          330            │
└─────────────────────────┘
             │
             ▼
┌─────────────────────────┐
│  Move this node to the  │
│  Active part of         │
│  reliability tree       │
│  + Rebalance the OST +  │
│  update logical clock   │
│          340            │
└─────────────────────────┘
             │
             ▼
┌─────────────────────────┐
│  Broadcast the new      │
│  reliability Tree       │
│       [UNLOCK           │
│  the reliability tree]  │
│          350            │
└─────────────────────────┘
```

**Fig. 6**

```
         ┌─────────────────────────────┐
         │ Message Transfer Mode START │
         │            610              │
         └─────────────────────────────┘
                        │
                        ▼
              ◇ Forward? ◇
     Yes ◄────┘        │
      │               No
      ▼                │
┌──────────────────┐   ▼
│ Forward to all the│  ◇ Delivery ◇ ─── No ──► ┌────────┐
│ Active nodes in the│  ◇ Request? ◇           │ Ignore │
│ reliability rank tree│                        └────────┘
│        620        │   │
└──────────────────┘   Yes
      │                 │
      ▼                 ▼
  ┌──────┐      ◇ Data available ◇
  │ Done │   No ─┘     locally?
  └──────┘   │
            ▼            │
┌────────────────────┐  Yes
│ Request the data from│  │
│ the highest ranking │  ▼
│ Passive node +      │ ┌──────────────┐
│ Transition Active-  │ │ Populate the │
│ Passive             │ │ queue/deliver│
│        640          │ │ to client    │
└────────────────────┘ │     630      │
            └──────────►└──────────────┘
                               │
                               ▼
                          ┌──────┐
                          │ Done │
                          └──────┘
```

**Fig. 7**

```
┌─────────────────────────────┐
│ [Lock Reliability Index Tree]│
│             710             │
└─────────────────────────────┘
              │
              ▼
         ╱─────────╲
        ╱  Active to ╲
Yes ───┤   Passive?   │
        ╲            ╱
         ╲─────────╱
              │
             No
              │
              ▼
┌──────────────────────┐      ╱──────────────────╲
│ Reset Reliability-   │     ╱  Passive to Active? ╲
│ Index of this node   │    ╱          &            ╲── No
│ to 0, then rebalance  │   │   It's highest ranking  │
│ the RI Tree          │    ╲    passive node?       ╱    │
│         720          │     ╲                      ╱   Ignore
└──────────────────────┘      ╲──────────────────╱
           │                         │
           │                        Yes
           │                         │
           │                         ▼
           │            ┌──────────────────────────┐
           │            │ Reset Reliability Index to │
           │            │ Outgoing Active node's Index│
           │            │   + update logical clock   │
           │            │           730             │
           │            └──────────────────────────┘
           │                         │
           │                         ▼
           │            ┌──────────────────────────┐
           │            │ Replicate all metadata &  │
           │            │ runtime data from highest │
           │            │    ranking Active Node    │
           │            │           740             │
           │            └──────────────────────────┘
           │                         │
           │                         ▼
           │            ┌──────────────────────────┐
           └───────────▶│  Broadcast the new RI Tree │
                        │ [Unlock Reliability Index  │
                        │        Tree]              │
                        │           750             │
                        └──────────────────────────┘
                                     │
                                     ▼
                                  ┌──────┐
                                  │ Done │
                                  └──────┘
```

**Fig. 8**

```
        ┌─────────┐          ┌─────────┐
        │    L    │◄─────────│    B    │
        └─────────┘          └─────────┘
             │                    ▲
             ▼                    │
        ┌─────────┐          ┌────────┐
        │    M    │◄─────────│  OST   │
        └─────────┘          └────────┘
```

**Fig. 9**

```
┌──────────────┐                              ┌──────────────┐
│  Publisher   │                              │  Subscriber  │
└──────────────┘                              └──────────────┘

  ┌──────────────────────────────────────────────────────────┐
  │   ┌──────────────┐            ┌──────────────┐            │
  │   │  Client for  │            │  Client for  │            │
  │   │  Publisher   │            │  Subscriber  │            │
  │   ├──────────────┤            ├──────────────┤            │
  │   │  RBroker 2   │            │  RBroker 1   │            │
  │   │              │            │              │            │
  │   └──────────────┘            └──────────────┘            │
  │     Broker 1                    Broker 2                  │
  └──────────────────────────────────────────────────────────┘

              ┌──────────────────────────────┐
              │   A Cluster of two Brokers    │
              └──────────────────────────────┘
```

**EP 2 645 675 B1**